# EUROPÄISCHE PATENTSCHRIFT

(11) **EP 3 071 394 B1**
(45) Veröffentlichungstag und Bekanntmachung des Hinweises auf die Patenterteilung: **27.02.2019**
(21) Anmeldenummer: 14835649.6
(22) Anmeldetag: 20.11.2014
(51) Int. Cl.: B29C 64/135

(54) **VORRICHTUNG ZUM VERARBEITEN VON PHOTOPOLYMERISIERBAREM MATERIAL ZUM SCHICHTWEISEN AUFBAU EINES FORMKÖRPERS**
DEVICE FOR PROCESSING PHOTOPOLYMERIZABLE MATERIAL IN ORDER TO CONSTRUCT A SHAPED BODY LAYER BY LAYER
DISPOSITIF DE TRANSFORMATION DE MATÉRIAU PHOTOPOLYMÉRISABLE DESTINÉ À LA FABRICATION COUCHE PAR COUCHE D'UN ÉLÉMENT FAÇONNÉ

(30) Priorität: 22.11.2013 AT 9012013
(43) Veröffentlichungstag der Anmeldung: 28.09.2016
(73) Patentinhaber: Technische Universität Wien, 1040 Wien (AT); Ivoclar Vivadent AG, 9494 Schaan (LI)
(72) Erfinder: STAMPFL, Jürgen, A-1050 Wien (AT); GRUBER, Simon, A-1080 Wien (AT)
(74) Vertreter: Keschmann, Marc
(86) Internationale Anmeldenummer: PCT/AT2014/000207
(87) Internationale Veröffentlichungsnummer: WO 2015/074088

(56) Entgegenhaltungen:
- EP-A1- 1 103 368
- EP-A1- 2 505 341
- WO-A1-01/91919
- US-A- 5 545 367

## Beschreibung

Die Erfindung betrifft ein Verfahren zum Verarbeiten von photopolymerisierbarem Material zum schichtweisen Aufbau eines Formkörpers, umfassend
a) das Vorsehen einer einen zumindest bereichsweise lichtdurchlässigen Boden aufweisenden Wanne, in der sich das photopolymerisierbare Material befindet,
b) das Verfahren einer Bauplattform auf eine solche Höhe, dass zwischen der Unterseite der Bauplattform oder, wenn bereits vorhanden, der untersten ausgehärteten Schicht des daran gebildeten Formkörperteils und dem Wannenboden eine Schicht des photopolymerisierbaren Materials mit vorgegebener Dicke definiert wird,
c) das ortsselektive Belichten der Schicht von unten durch den Wannenboden, um die Materialschicht in der gewünschten Form auszuhärten,
d) das Wiederholen der Schritte b) und c) bis die letzte Schicht des Formkörpers gebildet ist, wobei das photopolymerisierbare Material bei Raumtemperatur (20°C) eine Viskosität von mindestens 20 Pa·s aufweist und die Schicht des photopolymerisierbaren Materials in der Wanne auf eine Temperatur von mindestens 30°C aufgewärmt wird, um die Viskosität abzusenken.

Weiters betrifft die Erfindung eine Vorrichtung zur Durchführung dieses Verfahrens.

Ein Verfahren und eine Vorrichtung der eingangs genannten Art sind aus der US 5545367 A bekannt geworden.

In den Dokumenten EP 2505341 A1 und WO 2010/04593C A1 werden Verfahren, umfassend die Schritte a) bis d) beschrieben.

Solche Verfahren und Vorrichtungen erlauben die lithographiebasierte generative Fertigung von Formstücken, insbesondere im Rahmen des sog. Rapid Prototyping. Bei den genannten stereolithographischen Verfahren wird jeweils eine neu aufgetragene Materialschicht durch ortsselektive Belichtung in der gewünschten Form polymerisiert, wodurch sukzessive durch schichtweise Formgebung der gewünschte Körper in seiner dreidimensionalen Form, die sich aus der Aufeinanderfolge der aufgebrachten Schichten ergibt, hergestellt wird.

Die lithographiebasierte generative Fertigung bietet gegenüber konkurrierenden 3D-Druckverfahren den großen Vorteil der sehr guten Präzision und Oberflächenqualität der gedruckten Bauteile. Der große Nachteil, der eine flächige Verbreitung dieser Verfahren in der Fertigungstechnik behindert, ist die geringe Bruchzähigkeit (Schlagzähigkeit) dieser Materialien. Konkurrierende Verfahren (z.B. selektives Lasersintern - SLS, oder Fused Deposition Modelling - FDM) erlauben die Verarbeitung von thermoplastischen Materialien (z.B. ABS - Acrylbutadienstyrol), die eine wesentlich höhere Schlagzähigkeit im Vergleich zu Photopolymeren aufweisen. Aus diesem Grund sind die derzeit verfügbaren Verfahren zur generativen Fertigung nur für ausgewählte Anwendungen, z.B. im Prototypenbau, einsetzbar. Die Verwendung als Fertigungswerkzeug für die Serienfertigung von Kunststoffteilen ist nur in Ausnahmefällen sinnvoll, stellt aber den mit Abstand größten Markt dar.

Die geringe Schlagzähigkeit von Photopolymeren steht vor allem im Zusammenhang mit der geringen intermolekularen Wechselwirkung zwischen den Ketten des Polymernetzwerkes. Ausgangsbasis für Anwendungen basierend auf Photopolymerisation (Lackindustrie, dentale Kompositfüllungen) sind üblicherweise relativ dünnflüssige Ausgangssubstanzen, die sich aufgrund der geringen Viskosität bei Raumtemperatur einfach verarbeiten lassen. Durch chemische Vernetzung entstehen während der Photopolymerisation kovalente Bindungen, und das resultierende Polymernetzwerk weist aufgrund der starken Bindungsenergien der kovalenten Vernetzungspunkte eine relativ hohe Härte und Steifigkeit auf. Die Sekundärbindungen, die physikalischer Natur sind (Van der Waals Bindung, Wasserstoffbrückenbindung) wirken ebenfalls zwischen den Polymerketten, tragen aufgrund ihrer geringen Bindungsenergien aber wenig zu den mechanischen Eigenschaften des Gesamtnetzwerkes bei. Problematisch in dieser Konstellation ist die resultierende geringe Bruchzähigkeit des Werkstoffes: sobald ein Anriss in der Probe die vor ihm liegenden kovalenten Bindungen durch die hohen Spannungskonzentrationen an der Rissspitze aufbricht, beginnt der Riss zu wachsen. Das Polymernetzwerk hat in dieser Form keine Möglichkeit zur plastischen Deformation, und die Zähigkeit wird im Wesentlichen nur durch die Oberflächenenergie der neu geschaffenen Oberflache an der Rissspitze bestimmt.

Es ist bekannt, dass Thermoplaste zähigkeitsmodifiziert werden können, indem gezielt kleine Elastomerpartikel eingebracht werden, die bei mechanischer Belastung in einem relativ großen Volumen eine Vielzahl von kleinen Rissen entstehen lassen. Die Elastomerpartikel verhindern jedoch ein Weiterwachsen des Risses, und die umliegende Matrix kann sich plastisch verformen (Crazing) und Energie dissipieren. Basis eines bruchzähen Polymers ist also eine Matrix, die das Potenzial zur Plastifizierung hat, sowie eingelagerte Teilchen, die eine Vielzahl von unterkritischen Rissen erzeugen, und so die Plastifizierung in einem großen Volumen ermöglichen.

Bei Photopolymeren kann eine Plastifizierung und entsprechende Zähigkeitssteigerung durch die Verwendung von Monomersystemen mit hoher intermolekularer Wechselwirkung erzielt werden. Das hat jedoch zur Folge, dass die Ausgangsmaterialien bei Raumtemperatur entweder fest oder sehr hoch viskos sind, sodass die Verarbeitbarkeit in der lithographiebasierten generativen Fertigung erheblich erschwert wird.

Mit einer hohen Viskosität des Ausgangsmaterials ist man auch bei der Verarbeitung von gefüllten photopolymerisierbaren Materialien (Schlicker) konfrontiert. Hierbei wird ein sinterfähiges Material (z.B. Keramik oder Metall) in Pulverform einem zähflüssigen, lichtempfindlichen Kunstharz beigemengt. Beim Aushärten der einzelnen Schichten wirkt das ausgehärtete Polymer als Binder. Nachdem der schichtartige Aufbau des Formkörpers beendet ist, wird das ausgehärtete Polymer thermisch entfernt und danach wird das übergebliebene Füllmaterial (z.B. Keramikpulver) zu einer festen Struktur zusammengesintert. Dieses Verfahren erlaubt es, alle Vorteile der generativen Fertigung auch für Materialien zu nützen, die grundsätzlich nicht für diese Verfahren geeignet wären. Der Füllgrad, d.h. der Anteil an Pulver im Schlicker, ist hierbei einer der wichtigsten Faktoren bezüglich Verarbeitbarkeit und Materialqualität. Hohe Füllgrade sind jedoch meistens mit einer hohen Viskosität des Ausgangsmaterials verbunden, was einige Probleme mit sich bringt, wie z.B. hohe Reaktionskräfte, Entmischung des Schlickers und erschwerter Materialnachtransport.

Die vorliegende Erfindung zielt daher darauf ab, lithographiebasierte generative Fertigungsverfahren dahingehend weiterzuentwickeln, dass auch Ausgangsmaterialien mit hochviskoser oder sogar fester Konsistenz verarbeitet werden können. Weiters zielt die Erfindung darauf ab, hochwertige Materialien zu verarbeiten, die sich nicht nur für die Prototypenherstellung, sondern auch für die Fertigung (Rapid Manufacturing) eignen.

Zur Lösung dieser Aufgabe sieht die Erfindung bei einem Verfahren der eingangs genannten Art im Wesentlichen vor, dass die Erwärmung der Schicht des photopolymerisierbaren Materials und ggf. das Halten der Temperatur mittels Wärmeeinbringung großflächig und direkt an dem Wannenboden und nur in der Prozesszone der Anlage, insbesondere mittels wenigstens eines am oder im Wannenboden angeordneten Heizelements, wie z.B. Heizfolien, erfolgt, wobei die Prozesszone den Bereich zwischen transparentem Wannenboden und dem bisher gebauten Formkörper umfasst. Die erhöhte intermolekulare Wechselwirkung äußert sich durch eine erhöhte Viskosität bei Raumtemperatur (20°C). Die intermolekulare Wechselwirkung wird im vorliegenden Fall insbesondere dann als ausreichend betrachtet, wenn das Ausgangsmaterial bei Raumtemperatur eine Viskosität von mindestens 20 Pa·s aufweist. Bevorzugt wird die Materialschicht auf mindestens 40°C aufgewärmt. Der Erfindung liegt die Erkenntnis zugrunde, dass verschiedene strahlungsaushärtende Polymere bereits bei geringer Temperaturerhöhung eine deutliche Verringerung der Viskosität zeigen. Im Allgemeinen reicht eine Erwärmung auf maximal 50°C aus, sodass sich der zusätzliche Energiebedarf in vertretbaren Grenzen hält. In speziellen Fällen kann eine Erwärmung auf bis zu 80°C erforderlich sein. Bei höheren Temperaturen kommt es zur ungewollten thermischen Polymerisation der Photopolymere. Die Erwärmung des Materials erfolgt dabei erfindungsgemäß nur in der Prozesszone der Anlage. Die Prozesszone umfasst den Bereich zwischen transparentem Wannenboden und dem bisher gebauten Formkörper. Typischerweise wird eine Photopolymerschicht mit einer Dicke zwischen 10µm und 1000µm beheizt. Der verbleibende Prozessraum der Anlage, in dem sich der Formkörper befindet, kann eine Temperatur aufweisen, die unterhalb der Temperatur der Prozesszone liegt. Erfindungsgemäß wird das viskose Material großflächig und direkt an der Grenzfläche (Wannenboden) erwärmt.

Weiters wurde erkannt, dass eine bessere Verringerung der Viskosität derart, dass die Materialverteilung und Schichtbildung in der Wanne ohne großen Kraft- und Zeitaufwand gelingt, bevorzugt nur dann sichergestellt ist, wenn das ganze Materialbad erwärmt wird, und nicht nur das Material im belichteten Bereich. Die Erwärmung lediglich einer Teilmenge des Materials im Bereich einer als Draht ausgebildeten Mischeinrichtung, wie dies in der EP 2505341 A1 beschrieben ist, hat sich als unzureichend herausgestellt.

Durch die Erfindung gelingt es nun im Rahmen von lithographiebasierten generativen Fertigungsverfahren Ausgangsmaterialien einzusetzen, die verbesserte Materialeigenschaften des Endprodukts, insbesondere eine hohe Präzision, eine sehr gute Oberflächenqualität, eine ausgezeichnete Schlagzähigkeit und ein verbesserte Warmformbeständigkeit ermöglichen. Deshalb können solche Verfahren vermehrt auch in der Serienfertigung Verwendung finden.

Eine bevorzugte Verfahrensführung sieht vor, dass die Temperatur des photopolymerisierbaren Materials während der Schritte b), c), und d) auf einer Temperatur von mindestens 30°C, bevorzugt mindestens 40°C gehalten wird. Das Materialbad wird somit konstant auf der jeweils erforderlichen erhöhten Temperatur gehalten, wodurch sich ein oftmaliger Temperaturwechsel erübrigt.

Erfindungsgemäß erfolgt die Erwärmung des photopolymerisierbaren Materials und ggf. das Halten der Temperatur mittels Wärmeeinbringung über den Wannenboden, insbesondere mittels wenigstens eines am oder im Wannenboden angeordneten Heizelements, wie z.B. Heizfolien. Der Wärmeeintrag erfolgt somit über den Wannenboden, sodass eine energieeffiziente Wärmeübertragung sichergestellt ist. Die Wärmeeinbringung über den Boden kann aber auch mittels Wärmestrahlung erfolgen, z.B. durch Anstrahlen des Wannenbodens mit elektromagnetischen Wellen, insbesondere Infrarot-Licht.

Es ist bekannt, dass bei lithographiebasierter generativer Fertigung ein deutliches Schrumpfen der belichteten Schicht während der chemischen Reaktion eintritt. Diese Schrumpfung führt in weiterer Folge zu inneren Spannungen bzw. zum Verzug des endgültigen Bauteils. Das Ausmaß der Schrumpfung ist von der Konzentration an reaktiven Gruppen abhängig. Je höher diese Konzentration an reaktiven Gruppen (z.B. Acrylat-Gruppen, Methacrylat-Gruppen oder Epoxid-Gruppen), desto größer die Schrumpfung. Durch Verwendung von längerkettigen Ausgangsmonomeren weist das Photopolymer eine geringere Dichte an reaktiven Gruppen auf. Diese längerkettigen Ausgangspolymere erhöhen die Viskosität im Vergleich zu literaturbekannten dünnflüssigen Photopolymeren. Das vorliegende Verfahren zur Verarbeitung hochviskoser Photopolymere ermöglicht es somit, die Schrumpfung des Bauteils zu minimieren und in weiterer Folge eine verbesserte Präzision des Bauteils zu erhalten.

Durch die erhöhte Temperatur in der Prozesszone wird auch die Reaktivität des Photopolymers erhöht. Im Vergleich zur Verarbeitung bei Raumtemperatur ist somit eine Reduktion von reaktiven Gruppen möglich, ohne die Reaktivität des Gesamtsystems zu verschlechtern.

Im Rahmen der Erfindung wird bevorzugt ein photopolymerisierbares Material mit einem relativen Molekulargewicht von mindestens 5000 verwendet. Bevorzugt sind folgende Photopolymere/Monomersysteme einsetzbar:
- Mono- und multifunktionelle Urethanacrylate sowie Urethanmethacrylate mit einem relativen Molekulargewicht von mindestens 5000.
- Mono- und multifunktionelle Acrylate und Methacrylate mit aromatischen Spacern mit einem relativen Molekulargewicht von mindestens 5000.
- Mono- und multifunktionelle Epoxide mit einem relativen Molekulargewicht von mindestens 5000.

Ein besonderer Vorteil der vorliegenden Erfindung liegt in der Ausnutzung des Umstands, dass beim ortsselektiven Belichten der jeweiligen Materialschichten umgebendes Material an den freien Oberflächen der ausgehärteten Schicht haften bleibt. Dieses anhaftende Material rinnt bei herkömmlichen, eher dünnflüssigen Photopolymeren im Laufe des weiteren Schichtaufbaus an den Oberflächen des Formkörpers herab und gelangt dadurch wieder in das flüssige Materialbad. Bei hochviskosen Ausgangsmaterialien hingegen erhält das beim Austauchen aus dem Materialbad auf Raumtemperatur abkühlende ungehärtete Material wieder seine annähernd feste Konsistenz, sodass es an der Oberfläche des Formkörpers haften bleibt, wenn im restlichen Bauraum eine geringere Temperatur herrscht als in der Prozesszone. Das anhaftende Material, das insbesondere aus erstarrtem Restmonomer gebildet ist, kann dann besonders vorteilhaft als Stützmaterial für den sich bildenden Formkörper dienen. Das Stützmaterial kann somit eine sonst erforderliche, gesonderte Abstützung, die bei herkömmlichen Verfahren (z.B. Stereolithographie) gemäß dem Stand der Technik mechanisch mit dem Formkörper verbunden werden muss, ersetzen. Im gegenständlichen Verfahren kann durch leichtes Erhitzen des Formkörpers im Anschluss an den Bauprozess das erstarrte Stützmaterial in einfacher Weise wieder entfernt werden. Dadurch wird ein Prozess verfügbar, bei dem keine mechanische Entfernung der Stützstrukturen mehr erforderlich ist, was für eine Automatisierung der Fertigung von 3D-gedruckten Bauteilen sehr vorteilhaft ist. Alternativ kann der Stützkörper gemeinsam mit dem Formkörper aus ausgehärtetem Material schichtweise aufgebaut werden, wobei lediglich wenigstens eine Schicht am Übergang zwischen dem Stützkörper und dem in der Folge abzustützenden Teil des Formkörpers aus ungehärtetem, durch Abkühlen erstarren gelassenen Material gebildet wird. Die auf diese Art erzeugte Klebeschicht zwischen dem Stützkörper und dem abzustützenden Teil des Formkörpers kann in der Folge durch Erwärmen des fertig gestellten Formkörpers weich bzw. fließfähig gemacht werden, sodass der Stützkörper mit geringem Aufwand entfernt werden kann.

Das erfindungsgemäße Verfahren ist in diesem Zusammenhang derart weitergebildet, dass ungehärtetes photopolymerisierbares Material, das an dem an der Bauplattform gebildeten Formkörperteil anhaftet, durch Abkühlen erstarren gelassen wird. Das Abkühlen kann hierbei an stehender Umgebungsluft erfolgen. Es kann aber auch bewegte, nicht gekühlte Umgebungsluft zum Einsatz gelangen, um das Abkühlen auf Raumtemperatur zu beschleunigen. Alternativ ist naturgemäß die Verwendung verschiedenster Kühlaggregate möglich, die mit einem unter die Umgebungstemperatur abgekühlten Kühlmedium arbeiten.

Um die Ausbildung von zwei Temperaturzonen zu begünstigen, kann zwischen dem Bad des photopolymerisierbaren Materials und der Bauplattform bzw. dem daran ausgebildeten Formkörper eine thermische Isolierung angeordnet werden. Dadurch wird ein unerwünschter Wärmeeintrag vom erwärmten Bad in die darüber angeordnete Kühlzone minimiert.

Vorteilhafte Materialeigenschaften können bevorzugt auch dadurch erreicht werden, dass das photopolymerisierbare Material wie eingangs erwähnt mit sinterfähigem Material, wie z.B. keramischem Material oder Metall, gefüllt ist. Dabei hat sich herausgestellt, dass insbesondere bei einem Füllgrad zwischen 42 und 65 Vol.-% hochqualitative Bauteile erzeugt werden können.

Bei Verfahren der gegenständlichen Art kommen meist Werkzeuge zum Einsatz, um das Material in der Wanne umzuwälzen oder neu zu verteilen, um eine homogene Materialschicht zu gewährleisten. Die Erfindung ist in diesem Zusammenhang bevorzugt derart weitergebildet, dass das photopolymerisierbare Material vor Schritt b) in der Wanne mit Hilfe einer unter der Bauplattform hindurchbewegten Rakel zur Erzielung einer gleichmäßigen Schichtdicke verteilt wird, wobei die Rakel bevorzugt zwei in Bewegungsrichtung beabstandete Rakelklingen aufweist, die in konstantem Abstand zum Wannenboden über diesen bewegt werden. Die Rakel sorgt insbesondere bei einer Ausbildung mit zwei Rakelklingen auch für einen gleichbleibenden und schnellen Nachtransport von unverbrauchtem Schlicker. Bevorzugt ist hierbei vorgesehen, dass der vertikale Abstand der Rakelklingen zum Wannenboden mittels einer einfachen Justiereinheit justiert und auf diese Weise die Schichtdicke des aufgetragenen Materials eingestellt werden kann. Die Rakel ist bevorzugt mit einer Antriebseinheit verbunden, welche diese zu einer Hin- und Herbewegung antreibt. Die Ausbildung mit zwei Rakelklingen ermöglicht eine Materialbeschichtung in beide Bewegungsrichtungen, womit die Prozesszeit erheblich verkürzt werden kann. Bei Systemen mit herkömmlicher Rakel muss die Rakel bzw. das Wischelement hingegen hin- und zurückgefahren werden, bevor eine neue Schicht aufgetragen werden kann.

Die Ausbildung mit zwei Rakelklingen bietet weiters den Vorteil, dass zwischen den Rakelklingen eine Kammer ausgebildet werden kann, die als Reservoir für unverbrauchtes Material dienen kann. Bei der Hin- bzw. Herbewegung der Rakel während des Verteilungsschritts kann das unverbrauchte Material hierbei nach unten aus der Kammer herausfließen, um ggf. bestehende Löcher, Freiräume oder Vertiefungen in der Materialschicht aufzufüllen, wobei die in Bewegungsrichtung nacheilende Rakelklinge die Schichtdicke definiert. Löcher, Freiräume oder Vertiefungen im Badniveau ergeben sich insbesondere in dem Bereich, in dem die Bauplattform bzw. bereits ausgehärtete Schichten des Formkörpers nach dem Belichtungsvorgang aus dem Bad herausgehoben werden. Da sich der unverbrauchte Schlicker hauptsächlich in der Kammer befindet, wird relativ wenig Material zum Start des Bauprozesses und zum Aufrechterhalten des zuverlässigen Materialnachtransports benötigt.

Bei der Hin- und Herbewegung der Rakel schiebt die in Bewegungsrichtung vorauseilende Rakelklinge überschüssiges Material vor sich her, bis die Rakel am anderen Ende der Wanne angekommen ist. Dort staut sich das überschüssige Material, das sich in Form einer kleinen Welle vor der Klinge angesammelt hat, zwischen der Rakelklinge und der Wannenstirnwand auf und tendiert dazu, seitlich neben der Rakel oder über den oberen Rand der Rakel hinweg zurückzufließen. Um das sich aufstauende Material zu nutzen bzw. zu bearbeiten, ist bevorzugt vorgesehen, dass das Material während oder am Ende des Verteilungsschritts durch Überströmkanäle in eine zwischen den zwei Rakelklingen ausgebildete Kammer gedrückt wird. Dadurch wird erreicht, dass das Material in der Kammer für den nächstfolgenden Verteilungsschritt wieder zur Verfügung steht. Außerdem wird das Material durch die Quetschung und das Strömen durch die Überströmkanäle ständig durchgemischt, sodass die Gefahr einer Entmischung insbesondere bei gefüllten Photopolymeren erheblich reduziert werden kann.

Während des erfindungsgemäßen Verfahrens ist erforderlichenfalls für einen ausreichenden Nachschub an frischem Photopolymer Sorge zu tragen. In besonders einfacher Weise ist in diesem Zusammenhang vorgesehen, dass frisches photopolymerisierbares Material durch Einbringen in eine zwischen den zwei Rakelklingen ausgebildete, oben offene Kammer nachgefüllt wird. Das Nachfüllen erfolgt dabei über die obere Öffnung der Kammer, wobei bevorzugt eine Dosiereinheit zum Einsatz gelangt.

Weiter sieht eine bevorzugte Weiterbildung vor, dass wenigstens eine dritte Rakelklinge vorgesehen ist, die bevorzugt zwischen den zwei Rakelklingen angeordnet ist und so positioniert bewegt wird, dass unverbrauchtes Material vom Wannenboden abgehoben wird. Auf diese Weise wird das unverbrauchte Material bei jeder Hin- bzw. Herbewegung der Rakel vom Wannenboden angehoben und in die zwischen den beiden Rakelklingen ausgebildete Kammer gefördert, wo eine Durchmischung und Homogenisierung erfolgen kann.

Um sicherzustellen, dass die dritte Rakelklinge bei einer Höhenverstellung der Rakel nicht gesondert nachgestellt werden muss, ist die dritte Rakelklinge bevorzugt gegen den Wannenboden federnd andrückbar angeordnet. Dies kann dadurch realisiert werden, dass die Klinge selbst aus elastischem Material gebildet ist oder dadurch, dass die Klinge gegen eine Rückstellkraft einwärts verlagerbar gehalten ist. Dadurch wird erreicht, dass die dritte Rakelklinge unabhängig von der jeweiligen Höhenposition der Rakel den Wannenboden kontaktiert.

Zur Lösung der der Erfindung zugrunde liegenden Aufgabe sieht die Erfindung gemäß einem weiteren Aspekt eine Vorrichtung zum Verarbeiten von photopolymerisierbarem Material zum schichtweisen Aufbau eines Formkörpers vor, umfassend
- eine Wanne mit einem zumindest bereichsweise lichtdurchlässigen Boden, in die photopolymerisierbares Material einfüllbar ist,
- eine Bauplattform, die in einstellbarer Höhe über dem Wannenboden gehalten ist,
- eine Belichtungseinheit, die zur ortsselektiven Belichtung einer zwischen der Unterseite der Bauplattform und dem Wannenboden ausgebildeten Materialschicht von unten durch den Wannenboden ansteuerbar ist,
- eine Steuereinheit, die dazu vorbereitet ist, in aufeinanderfolgenden Belichtungsschritten übereinanderliegende Schichten auf der Bauplattform jeweils mit vorgegebener Geometrie durch Steuerung der Belichtungseinheit zu polymerisieren und nach jedem Belichtungsschritt für eine Schicht die Relativposition der Bauplattform zum Wannenboden anzupassen, um so sukzessive den Formkörper in der gewünschten Form aufzubauen,
- eine stationäre Heizeinrichtung zum Aufwärmen der Gesamtmenge des photopolymerisierbaren Materials in der Wanne auf eine Temperatur von mindestens 30°C.

Die Vorrichtung ist erfindungsgemäß dadurch gekennzeichnet, dass die Heizeinrichtung wenigstens ein am oder im Wannenboden angeordnetes Heizelement, wie z.B. eine Heizfolie umfasst und so ausgebildet ist, dass die Wärmeeinbringung großflächig und direkt an dem Wannenboden und nur in der Prozesszone der Anlage erfolgt, wobei die Prozesszone den Bereich zwischen transparentem Wannenboden und dem bisher gebauten Formkörper umfasst

Dabei ist wesentlich, dass die Heizvorrichtung eine von der Belichtungseinheit verschiedene Einrichtung darstellt.

Erfindungsgemäß umfasst die Heizeinrichtung wenigstens ein am oder im Wannenboden angeordnetes Heizelement, wie z.B. eine Heizfolie. Eine Heizfolie umfasst ein dünnes Trägerelement beispielsweise aus Kunststoff, in dem als Widerstandsheizung ausgebildete, meist mäanderartige Heizdrähte angeordnet sind. Dabei kann die Heizeinrichtung, wie z.B. die Heizfolie außerhalb des lichtdurchlässigen Bodenbereichs der Wanne angeordnet sein. Insbesondere können zwei Heizelemente, z.B. Heizfolien vorgesehen sein, wobei zu beiden Seiten des lichtdurchlässigen Bodenbereichs bzw. des Belichtungsbereichs jeweils ein Element angeordnet ist. In diesen seitlichen Bereichen befindet sich die Parkposition der Rakel während des Belichtungsvorgangs. Diese Anordnung erlaubt deshalb nicht nur eine störungsfreie Belichtung, sondern auch ein rasches Erwärmen des unverbrauchten Photopolymers, welches sich im Falle einer zwei Rakelklingen aufweisenden Rakel vorwiegend in der Kammer zwischen den beiden Rakelklingen befindet.

Alternativ oder zusätzlich kann vorgesehen sein, dass die Heizeinrichtung sich zumindest teilweise über den lichtdurchlässigen Bodenbereich der Wanne erstreckt und lichtdurchlässig ausgebildet ist. Dabei ist jedoch auf die optischen Eigenschaften der Heizfolie zu achten, insbesondere auf die Lichtdurchlässigkeit und darauf, dass keine gröberen Partikel eingeschlossen sind.

Eine Temperaturregelung gelingt in besonders einfacher Weise dadurch, dass ein Temperatursensor vorgesehen ist, der mit der Steuereinheit zur Regelung der Heizleistung der Heizeinrichtung derart zusammenwirkt, dass eine vorgegebene Temperatur des photopolymerisierbaren Materials erreicht und/oder gehalten werden kann. Der Temperatursensor ist bevorzugt als PT-Temperaturfühler ausgebildet und kann in die Heizfolie eingearbeitet sein.

Um die Ausbildung einer aus unverbrauchtem Photopolymer bestehenden Stützstruktur für den sich bildenden Formkörper zu begünstigen, ist bevorzugt vorgesehen, dass der Bauplattform eine Kühlvorrichtung zugeordnet ist, um ungehärtetes photopolymerisierbares Material, das an dem an der Bauplattform gebildeten Formkörperteil anhaftet, abzukühlen und erstarren zu lassen.

Bevorzugt sind eine bewegbar geführte Rakel und eine Antriebseinheit zum Hin- und Herbewegen der Rakel unter der Bauplattform hindurch vorgesehen, wobei die Rakel bevorzugt zwei in Bewegungsrichtung beabstandete Rakelklingen aufweist, die in konstantem Abstand zum Wannenboden über diesen bewegbar sind. Hierbei kann mit Vorteil zwischen den zwei vorzugsweise parallelen Rakelklingen eine vorzugsweise unten offene Kammer ausgebildet sein, deren wenigstens eine Wand wenigstens eine die Wand in Bewegungsrichtung der Rakel durchsetzende Öffnung zur Ausbildung eines Überströmkanals aufweist.

Um zu vermeiden, dass photopolymerisierbares Material im Bereich der Rakel, insbesondere das sich in der Reservoirkammer zwischen den beiden Rakelklingen befindliche Material, auskühlt, sieht eine bevorzugte Weiterbildung vor, dass die Rakel beheizbar ist. Insbesondere kann die Rakel mit wenigstens einem Heizelement, beispielsweise einem elektrischen Widerstandsheizelement ausgestattet sein.

Eine weitere bevorzugte Weiterbildung sieht vor, dass in zwei gegenüberliegenden Wänden der Kammer jeweils wenigstens eine Öffnung ausgebildet ist.

Weiters kann die unten offene Kammer an den Stirnseiten zwischen den zwei Rakelklingen jeweils eine Einströmöffnung aufweisen, sodass auch sich bodennah an der in Bewegungsrichtung vorauseilenden Rakelklinge aufstauendes Material in die Kammer einströmen kann.

Weiters kann wenigstens eine dritte Rakelklinge vorgesehen sein, die bevorzugt zwischen den zwei Rakelklingen angeordnet ist und gegenüber den zwei Rakelklingen in Richtung zum Wannenboden vorragt.

Besonders bevorzugt ist die Rakel samt den zwei äußeren Rakelklingen einstückig ausgebildet. Die Rakel besteht dabei bevorzugt aus einem Polymerwerkstoff, z.B. Polytetrafluorethylen oder Polyoxymethylen. Dadurch kann die Rakel besonders verschleißfest und steif ausgebildet werden. Auf Grund der hohen Verschleißfestigkeit kommt es während des Betriebs zu keinem nennenswerten Abrieb, sodass das Photopolymer nicht verschmutzt wird. Die genannten Werkstoffe für die Rakel sind außerdem leicht zu reinigen.

Die Belichtungseinheit kann grundsätzlich beliebig ausgebildet sein, wobei die Erfindung nicht auf die Verwendung von sichtbarem Licht beschränkt ist. Vielmehr ist jede elektromagnetische Strahlung geeignet, die in der Lage ist, das jeweils eingesetzte photopolymerisierbare Material zu härten. Beispielsweise kann UV-Licht zur Anwendung gelangen. Alternativ kann Licht mit einer Wellenlänge im sichtbaren Bereich verwendet werden.

Die Belichtungseinheit ist bevorzugt unter dem Wannenboden angeordnet. Sie wird von der Steuereinheit gesteuert, um ein vorgegebenes Belichtungsfeld an der Unterseite des Wannenbodens selektiv mit einem Muster in gewünschter Geometrie zu belichten. Vorzugsweise weist die Belichtungseinheit eine Lichtquelle mit einer oder mehreren Leuchtdioden auf, wobei im Belichtungsfeld vorzugsweise eine Lichtleistung von etwa 15 bis 200 mW/cm² erreicht wird. Die Wellenlänge des von der Belichtungseinheit abgestrahlten Lichts liegt vorzugsweise im Bereich von 350 bis 500 nm. Das Licht der Lichtquelle kann über einen Lichtmodulator ortsselektiv in seiner Intensität moduliert und in dem resultierenden Intensitätsmuster mit gewünschter Geometrie auf das Belichtungsfeld an der Unterseite des Wannenbodens abgebildet werden. Als Lichtmodulatoren können verschiedene Arten von sogenannten DLP-Chips (digital light processing Chips) dienen, wie zum Beispiel Mikrospiegelfelder, LCD-Felder und dergleichen. Alternativ kann als Lichtquelle ein Laser verwendet werden, dessen Lichtstrahl über einen beweglichen Spiegel, der von der Steuereinheit gesteuert werden kann, das Belichtungsfeld sukzessive abtastet.

Bevorzugt ist die Bauplattform in einem Hubmechanismus durch die Steuereinheit höhenverstellbar oberhalb des Wannenbodens gehalten. Vorzugsweise ist die Steuereinheit dazu vorbereitet, die Dicke der Schicht, nämlich den Abstand zwischen der Bauplattform oder der letzten erzeugten Schicht und dem Wannenboden, über den Hubmechanismus einzustellen.

Die Wanne ist bevorzugt zweiteilig ausgebildet und umfasst einen vorzugsweise mehrschichtigen, transparenten Wannenboden und einen Materialwannenrahmen. Die unterste Schicht des Wannenbodens besteht hierbei z.B. aus einer massiven Glasplatte, die als tragendes Element dient. Darüber liegen eine Silikonschicht und eine Antihaftfolie, die für eine Reduktion der Reaktionskräfte während des Druckprozesses sorgen. Der Rahmen besteht bevorzugt aus einem chemisch beständigen Kunststoff.

Mit Vorteil dient der Wannenrahmen neben der Funktion als Materialbehälter gleichzeitig als Spannvorrichtung für das Wannensystem. So ist ein einfacher und schneller Wannenwechsel möglich. Die zweiteilige Ausführung des Wannensystems erlaubt ein unkompliziertes und rasches Reinigen nach dem Druckvorgang.

Weiters kann ein einzelner Wannenkörper durch Trennwände in mehrere voneinander getrennte Wannensegmente unterteilt sein und so eine Mehrzahl von Wannen im Sinne der Erfindung bilden.

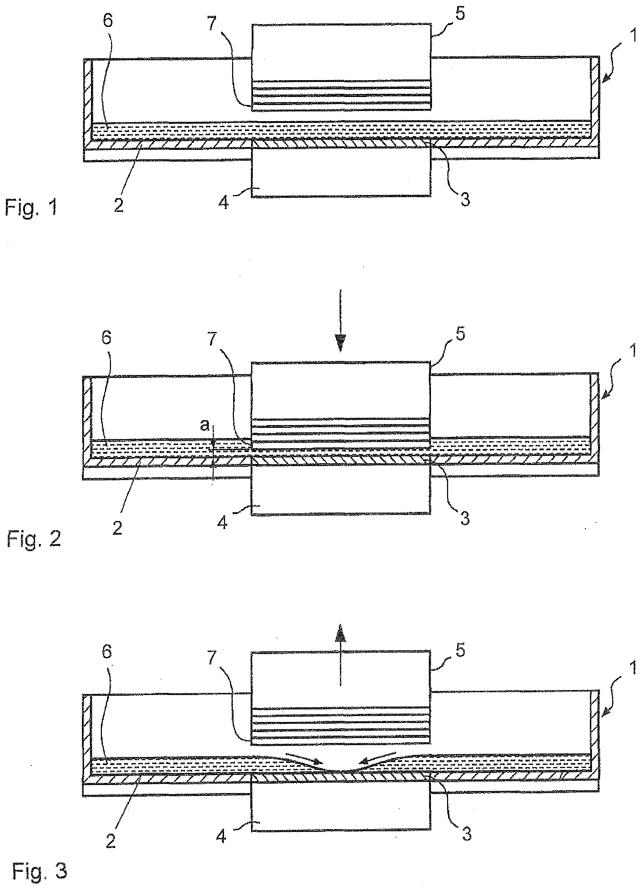

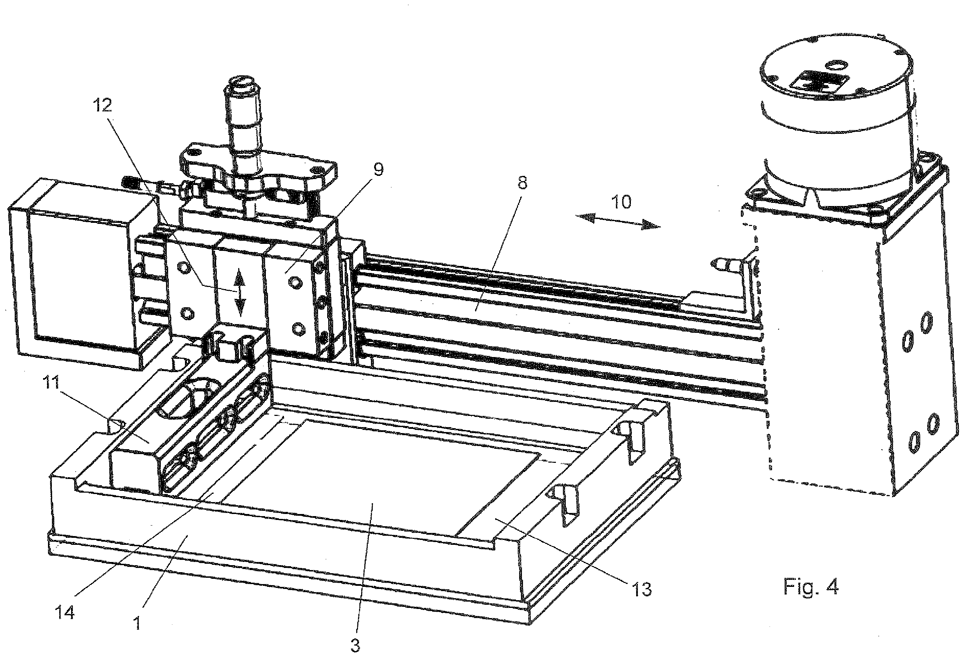

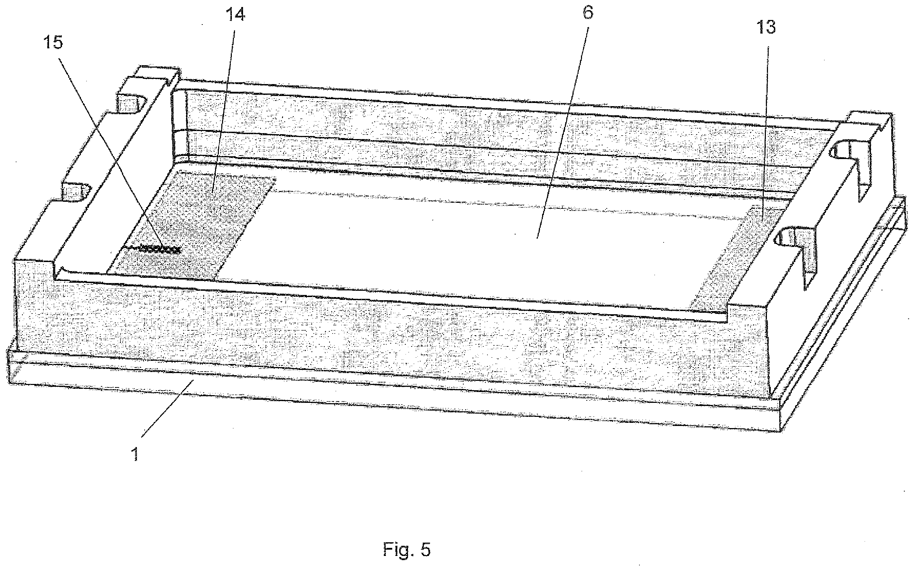

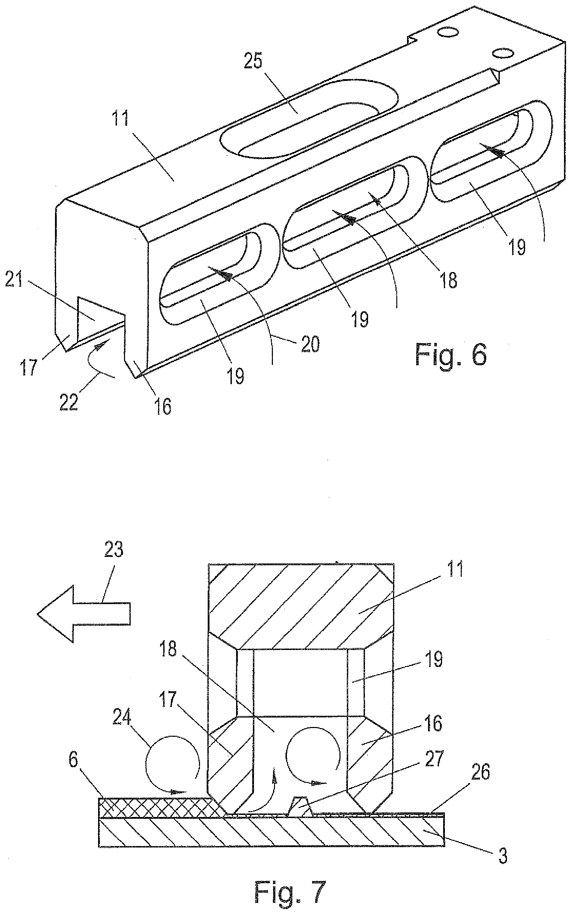

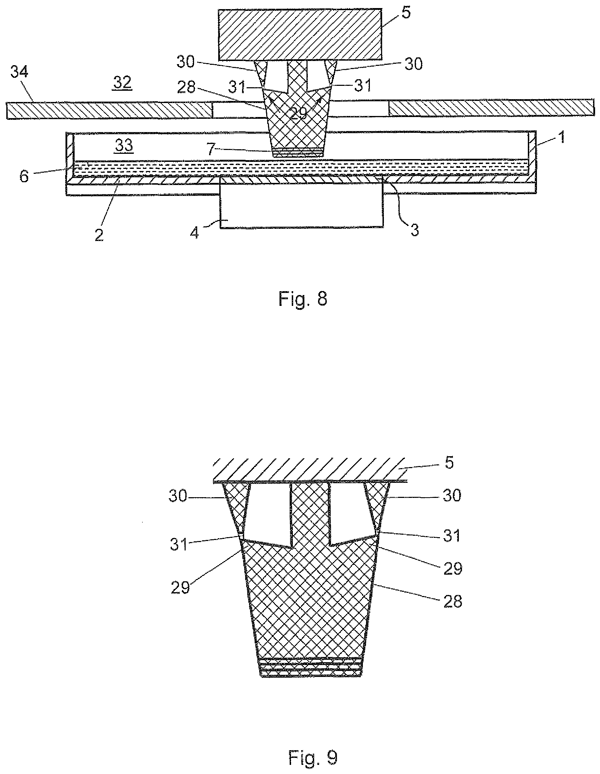

Die Erfindung wird nachfolgend anhand von in der Zeichnung schematisch dargestellten Ausführungsbeispielen näher erläutert. In dieser zeigen Fig. 1 bis 3 schematische seitliche Schnittansichten einer erfindungsgemäßen Vorrichtung in aufeinanderfolgenden Phasen des Verfahrensablaufs, Fig. 4 eine perspektivische Ansicht der Vorrichtung ohne Bauplattform, Fig. 5 eine perspektivische Ansicht der Wanne gemäß Fig. 4, Fig. 6 eine perspektivische Ansicht der erfindungsgemäß zum Einsatz gelangenden Rakel, Fig. 7 eine schematische Schnittansicht der Rakel gemäß Fig. 6, Fig. 8 eine abgewandelte Ausbildung der erfindungsgemäßen Vorrichtung mit zwei Temperaturzonen und Fig. 9 eine vergrößerte Darstellung des Formkörpers der Fig. 8.

Die Funktionsweise einer erfindungsgemäßen Vorrichtung wird zunächst unter Bezugnahme auf die Fig. 1 bis 3 beschrieben, wobei diesbezüglich auf die in der EP 2505341 A1 beschriebene Vorrichtung Bezug genommen wird. Die Vorrichtung weist eine Wanne 1 auf, deren Wannenboden 2 zumindest in einem Teilbereich 3 durchsichtig oder durchscheinend ist. Dieser Teilbereich 3 des Wannenbodens 2 überdeckt zumindest die Ausdehnung einer Belichtungseinheit 4, die unter dem Wannenboden 2 angeordnet ist. Die Belichtungseinheit 4 weist eine Lichtquelle und einen Lichtmodulator auf, mit dem die Intensität gesteuert von einer Steuereinheit ortsselektiv eingestellt wird, um ein Belichtungsfeld mit der für die momentan zu bildende Schicht gewünschten Geometrie an dem Wannenboden 2 zu erzeugen. Alternativ kann in der Belichtungseinheit 4 auch ein Laser verwendet werden, dessen Lichtstrahl über einen beweglichen Spiegel, der von einer Steuereinheit gesteuert wird, das Belichtungsfeld mit dem gewünschten Intensitätsmuster sukzessive abtastet.

Der Belichtungseinheit 4 gegenüber ist über der Wanne 1 eine Bauplattform 5 vorgesehen, die von einem nicht dargestellten Hubmechanismus getragen wird, so dass sie in höhenverstellbarer Weise über dem Wannenboden 2 im Bereich über der Belichtungseinheit 4 gehalten wird. Die Bauplattform 5 kann ebenfalls durchsichtig oder durchscheinend sein, so dass durch eine weitere Belichtungseinheit oberhalb der Bauplattform 5 Licht eingestrahlt werden kann, um zumindest bei der Bildung der ersten Schicht an der Unterseite der Bauplattform 5 diese auch von oben zu belichten, damit die erste an der Bauplattform 5 ausgehärtete Schicht auch mit hoher Verlässlichkeit an dieser anhaftet.

In der Wanne 1 befindet sich eine Füllung aus hochviskosem photopolymerisierbarem Material 6. Der Materialspiegel der Füllung liegt dabei deutlich höher als die Dicke der Schichten, die zur ortsselektiven Belichtung definiert werden sollen. Zur Definition einer Schicht aus photopolymerisierbarem Material wird in folgender Weise vorgegangen. Die Bauplattform 5 wird durch den Hubmechanismus in gesteuerter Weise abgesenkt, so dass (vor dem ersten Belichtungsschritt) ihre Unterseite in die Füllung des photopolymerisierbaren Materials 6 eintaucht und sich dem Wannenboden 2 soweit nähert, dass zwischen der Unterseite der Bauplattform 5 und dem Wannenboden 2 genau die gewünschte Schichtdicke a (siehe Fig. 2) verbleibt. Während dieses Eintauchvorgangs wird photopolymerisierbares Material aus dem Zwischenraum zwischen der Unterseite der Bauplattform 5 und dem Wannenboden 2 verdrängt. Nach Einstellung der Schichtdicke a erfolgt die für diese Schicht gewünschte ortsselektive Belichtung der Schicht, um sie in der gewünschten Form auszuhärten. Insbesondere bei der Bildung der ersten Schicht kann auch eine Belichtung von oben durch die durchsichtige oder durchscheinende Bauplattform 5 erfolgen, damit insbesondere im Kontaktbereich zwischen der Unterseite der Bauplattform 5 und dem photopolymerisierbaren Material 6 eine sichere und vollständige Aushärtung erfolgt und damit eine gute Anhaftung der ersten Schicht an der Bauplattform 5 gewährleistet ist. Nach der Bildung der Schicht wird die Bauplattform 5 mittels des Hubmechanismus wieder angehoben.

Diese Schritte werden nachfolgend mehrfach wiederholt, wobei dann jeweils der Abstand der Unterseite der zuletzt gebildeten Schicht 7 zum Wannenboden 2 auf die gewünschte Schichtdicke a eingestellt wird und daraufhin die nächste Schicht in der gewünschten Weise ortsselektiv ausgehärtet wird.

Nach Anheben der Bauplattform 5 nach einem Belichtungsschritt liegt im belichteten Bereich ein Materialdefizit vor, wie in Fig. 3 angedeutet. Dies ist dadurch bedingt, dass nach Aushärtung der eingestellten Schicht mit der Dicke a das Material aus dieser Schicht ausgehärtet und mit der Bauplattform 5 und dem daran bereits gebildeten Teil des Formkörpers angehoben wird. Das damit fehlende photopolymerisierbare Material zwischen der Unterseite des bereits gebildeten Formkörperteils und dem Wannenboden 2 muss aus der Füllung des photopolymerisierbaren Materials 6 aus dem Umgebungsbereich des belichteten Bereichs aufgefüllt werden. Aufgrund der hohen Viskosität des Materials fließt dieses jedoch nicht von selbst wieder in den belichteten Bereich zwischen der Unterseite des Formkörperteils und dem Wannenboden zurück, so dass hier Materialsenken oder "Löcher" zurückbleiben können.

In der Darstellung gemäß Fig. 4 sind die in den Fig. 1 bis 3 der Übersichtlichkeit halber weggelassenen Bauelemente der Vorrichtung dargestellt. Die Wanne ist wieder mit 1 bezeichnet, deren Boden einen durchsichtigen Bereich 3 aufweist. Der Wanne 1 ist eine Führungsschiene 8 zugeordnet, auf der ein Schlitten 9 in Richtung des Doppelpfeils 10 verschieblich geführt ist. Ein Antrieb sorgt für die Hin- und Herbewegung des Schlittens 9, der eine Halterung für eine Rakel 11 aufweist. Die Halterung weist eine Führung und eine Verstelleinrichtung auf, um die Rakel 11 in Richtung des Doppelpfeils 12 in Höhenrichtung zu verstellen. Damit kann der Abstand der Unterkante der Rakel 11 vom Boden der Wanne 1 eingestellt werden. Die Rakel 11 kommt zum Einsatz, nachdem die Bauplattform wie in Fig. 3 dargestellt angehoben wurde, und dient dazu das Material 6 gleichmäßig unter Einstellung einer vorgegebenen Schichtdicke zu verteilen, um das im Bereich der Bauplattform 5 auftretende Materialdefizit auszugleichen und um ggf. neues Material nachzuliefern. Die sich beim Materialverteilungsvorgang ergebende Schichtdicke des Materials 6 ist durch den Abstand der Unterkante der Rakel 11 vom Boden 2 der Wanne 1 definiert.

Weiters sind in Fig. 4 beiderseits des durchsichtigen Bereichs 6 des Wannenbodens 2 angeordnete Heizfolien 13 und 14 ersichtlich, die dazu dienen, das Material 6 aufzuwärmen, um dessen Viskosität herabzusetzen.

In Fig. 5 sind die Heizfolien 13 und 14 deutlicher ersichtlich. Weiters ist ein Temperatursensor 15 dargestellt, der dazu dient, die Temperatur der Heizfolie 14 bzw. des Materials 6 zu messen.

In Fig. 6 ist die Ausbildung der Rakel 11 im Detail dargestellt. Die Rakel weist zwei parallele Rakelklingen 16 und 17 auf, zwischen denen im Inneren der Rakel 11 eine Kammer 18 ausgebildet ist. An der Längsseite der Rakel 11 sind drei Überströmkanäle 19 vorgesehen, über welche Material 6 entsprechend den Pfeilen 20 in die Kammer 18 einströmen kann. Entsprechende Überströmkanäle sind auch an der rückwärtigen Längsseite der Rakel 11 vorgesehen, die in Fig. 6 jedoch nicht sichtbar sind. Weiters ist die Kammer 18 an den Stirnseiten der Rakel 11 offen (Öffnungen 21), sodass auch hier ein Einströmen von Material 6 entsprechend dem Pfeil 22 ermöglicht wird. Über die obere Öffnung 25 kann erforderlichenfalls neues Material in die Kammer 18 eingebracht werden.

Die Funktionsweise der Rakel 11 wird nun anhand der Schnittansicht gemäß Fig. 7 erläutert. Bei einer Bewegung der Rakel 11 in Richtung des Pfeils 23 definiert die Unterkante der Rakelklinge 16 bzw. 17 eine Materialschicht 26 mit einer vorgegebenen Schichtdicke. Die Rakelklingen 16 und 17 sind dabei in gleichem Abstand vom Boden 3 angeordnet. Überschüssiges Material 6 wird vor der in Bewegungsrichtung vorauseilenden Rakelklinge 17 hergeschoben, wobei sich eine Strömungsbewegung entsprechend dem Pfeil 24 ergibt. Wenn die Rakel 11 am Ende ihrer Bewegung gegen die Innenwand der Wanne 1 bewegt wird, wird das vor der Rakelklinge 17 aufgestaute Material über die Überströmöffnungen 19 in die Kammer 18 gedrückt. Seitlich kann das Material über die seitlichen Öffnungen 21 in die Kammer 18 gelangen.

Zwischen den Rakelklingen 16 und 17 ist eine in Fig. 7 schematisch angedeutete dritte Rakelklinge 27 angeordnet, die tiefer angeordnet ist als die Rakelklingen 16 und 17. Die dritte Rakelklinge 27 berührt den Wannenboden 3 und hebt unverbrauchtes Material vom Wannenboden ab. Auf diese Weise wird das unverbrauchte Material bei jeder Hin- bzw. Herbewegung der Rakel 11 in die Kammer 18 gefördert, wo eine Durchmischung und Homogenisierung erfolgen kann.

Dadurch, dass die Rakel 11 mit zwei Rakelklingen 16 und 17 und mit einer Kammer 18 und im Wesentlichen symmetrisch ausgebildet ist, genügt eine Hin- oder eine Herbewegung, um das Material für den nächsten Belichtungsschritt gleichmäßig zu verteilen. Dies ist ein wesentlicher Vorteil zu herkömmlichen Ausbildungen, bei denen zu diesem Zweck sowohl eine Hin- als auch ein Herbewegung erforderlich sind.

In Fig. 8 ist eine Vorrichtung gemäß den Fig. 1-3 dargestellt, bei der ergänzend zwei Temperaturzonen vorgesehen sind. Für gleiche Teile werden dieselben Bezugszeichen verwendet wie in den Fig. 1-3. Die Vorrichtung weist eine Wanne 1 auf, deren Wannenboden 2 zumindest in einem Teilbereich 3 durchsichtig oder durchscheinend ist. Dieser Teilbereich 3 des Wannenbodens 2 überdeckt zumindest die Ausdehnung einer Belichtungseinheit 4, die unter dem Wannenboden 2 angeordnet ist. Der Belichtungseinheit 4 gegenüber ist über der Wanne 1 eine Bauplattform 5 vorgesehen, die von einem nicht dargestellten Hubmechanismus getragen wird, so dass sie in höhenverstellbarer Weise über dem Wannenboden 2 im Bereich über der Belichtungseinheit 4 gehalten wird. In der Wanne 1 befindet sich eine Füllung aus hochviskosem photopolymerisierbarem Material 6. Auf die im Zusammenhang mit den Fig. 1-3 beschriebenen Weise wird eine Mehrzahl von Schichten 7 aufgebaut, von denen der Übersichtlichkeit nur die untersten Schichten eingezeichnet sind. Im Ausführungsbeispiel gemäß Fig. 8 wurde ein Formkörper 28 aufgebaut, der zwei überhängende Bereiche 29 aufweist. Während des Bauprozesses muss ein Stützkörper 30 für jeden der überhängenden Bereiche 29 zur Verfügung gestellt werden. Die Stützkörper 30 übernehmen hierbei die Funktion einer Bauplattform für die überhängenden Bereiche 29. Die Stützkörper 30 können auf der Bauplattform 5 vormontiert sein oder - wie im vorliegenden Ausführungsbeispiel - gemeinsam mit dem Formkörper 28 schichtweise aufgebaut werden. Am Übergang zwischen den Stützkörpern 30 und den aufzubauenden überhängenden Bereichen 29 wird nun wenigstens eine schematisch angedeutete Schicht 31 aus nicht polymerisierten Material ausgebildet. Die Schicht 31 entsteht dadurch, dass Material aus dem Bad 6 an den Stützkörpern hängenbleibt, welches nach dem Erhärten des Materials als Klebeschicht zwischen den Stützkörpern 30 und dem jeweiligen überhängenden Bereich 29 fungiert. Um das Erhärten des Materials zu begünstigen, wird eine Kühlzone 32 geschaffen, in der eine im Vergleich zur Zone 33 des erwärmten Bades 6 geringere Temperatur, insbesondere Umgebungstemperatur oder eine Temperatur von < 20°C herrscht. Um eine thermische Trennung der beiden Zonen 32 und 33 sicherzustellen, ist zwischen den Zonen eine thermische Isolierung 34 angeordnet. Die thermische Isolierung 34 ist bevorzugt plattenförmig, insbesondere ringförmig ausgebildet und unmittelbar oberhalb der Wanne 1 platziert.

## Patentansprüche

1. Verfahren zum Verarbeiten von photopolymerisierbarem Material (6) zum schichtweisen Aufbau eines Formkörpers, umfassend
a) das Vorsehen einer einen zumindest bereichsweise lichtdurchlässigen Boden aufweisenden Wanne (1), in der sich das photopolymerisierbare Material (6) befindet,
b) das Verfahren einer Bauplattform (5) auf eine solche Höhe, dass zwischen der Unterseite der Bauplattform (5) oder, wenn bereits vorhanden, der untersten ausgehärteten Schicht des daran gebildeten Formkörperteils und dem Wannenboden (2) eine Schicht des photopolymerisierbaren Materials (6) mit vorgegebener Dicke definiert wird,
c) das ortsselektive Belichten der Schicht von unten durch den Wannenboden (2), um die Materialschicht in der gewünschten Form auszuhärten,
d) das Wiederholen der Schritte b) und c) bis die letzte Schicht des Formkörpers gebildet ist, wobei
das photopolymerisierbare Material (6) bei Raumtemperatur (20°C) eine Viskosität von mindestens 20 Pa·s aufweist und die Schicht des photopolymerisierbaren Materials (6) in der Wanne (1) auf eine Temperatur von mindestens 30°C aufgewärmt wird, um die Viskosität abzusenken, **dadurch gekennzeichnet, dass** die Erwärmung der Schicht des photopolymerisierbaren Materials (6) und ggf. das Halten der Temperatur mittels Wärmeeinbringung großflächig und direkt an dem Wannenboden (2) und nur in der Prozesszone der Anlage, insbesondere mittels wenigstens eines am oder im Wannenboden (2) angeordneten Heizelements, wie z.B. Heizfolien, erfolgt, wobei die Prozesszone den Bereich zwischen transparentem Wannenboden (2) und dem bisher gebauten Formkörper umfasst.

2. Verfahren nach Anspruch 1, **dadurch gekennzeichnet, dass** die Temperatur des photopolymerisierbaren Materials (6) während der Schritte b), c), und d) auf einer Temperatur von mindestens 30°C gehalten wird.

3. Verfahren nach Anspruch 1 oder 2, **dadurch gekennzeichnet, dass** das photopolymerisierbare Material (6) ein Molekulargewicht von mindestens 5000 aufweist.

4. Verfahren nach einem der Ansprüche 1 bis 3, **dadurch gekennzeichnet, dass** ungehärtetes photopolymerisierbares Material (6), das an dem an der Bauplattform (5) gebildeten Formkörperteil anhaftet, durch Abkühlen erstarren gelassen wird.

5. Verfahren nach einem der Ansprüche 1 bis 4, **dadurch gekennzeichnet, dass** das photopolymerisierbare Material (6) mit Partikeln, wie z.B. keramischen oder metallischen Pulvern gefüllt ist.

6. Verfahren nach einem der Ansprüche 1 bis 5, **dadurch gekennzeichnet, dass** das photopolymerisierbare Material (6) vor Schritt b) in der Wanne (1) mit Hilfe einer unter der Bauplattform (5) hindurchbewegten Rakel (11) zur Erzielung einer gleichmäßigen Schichtdicke verteilt wird, wobei die Rakel (11) bevorzugt zwei in Bewegungsrichtung beabstandete Rakelklingen (16, 17) aufweist, die in konstantem Abstand zum Wannenboden (2) über diesen bewegt werden.

7. Verfahren nach Anspruch 6, **dadurch gekennzeichnet, dass** photopolymerisierbares Material (6) während des Verteilungsschritts durch Überströmkanäle (19) in eine zwischen den zwei Rakelklingen (16, 17) ausgebildete Kammer (18) gedrückt wird.

8. Verfahren nach Anspruch 6 oder 7, **dadurch gekennzeichnet, dass** frisches photopolymerisierbares Material (6) durch Einbringen in eine zwischen den zwei Rakelklingen (16, 17) ausgebildete, oben offene Kammer (18) nachgefüllt wird.

9. Verfahren nach Anspruch 6, 7 oder 8, **dadurch gekennzeichnet, dass** wenigstens eine dritte Rakelklinge (27) vorgesehen wird, die bevorzugt zwischen den zwei Rakelklingen (16, 17) angeordnet ist und so positioniert bewegt wird, dass unverbrauchtes Material vom Wannenboden (2) abgehoben wird.

10. Verfahren nach einem der Ansprüche 1 bis 9, **dadurch gekennzeichnet, dass** eine thermische Isolierung zwischen dem Bad des polymerisierbaren Materials (6) und der Bauplattform (5) bzw. dem daran ausgebildeten Formkörper angeordnet ist, um so zwei Temperaturzonen zu bilden.

11. Vorrichtung zur Durchführung des Verfahrens nach einem der Ansprüche 1 bis 10, umfassend
- eine Wanne (1) mit einem zumindest bereichsweise lichtdurchlässigen Boden, in die photopolymerisierbares Material (6) einfüllbar ist,
- eine Bauplattform (5), die in einstellbarer Höhe über dem Wannenboden (2) gehalten ist,
- eine Belichtungseinheit, die zur ortsselektiven Belichtung einer zwischen der Unterseite der Bauplattform (5) und dem Wannenboden (2) ausgebildeten Materialschicht von unten durch den Wannenboden (2) ansteuerbar ist,
- eine Steuereinheit, die dazu vorbereitet ist, in aufeinanderfolgenden Belichtungsschritten übereinanderliegende Schichten auf der Bauplattform (5) jeweils mit vorgegebener Geometrie durch Steuerung der Belichtungseinheit zu polymerisieren und nach jedem Belichtungsschritt für eine Schicht die Relativposition der Bauplattform (5) zum Wannenboden (2) anzupassen, um so sukzessive den Formkörper in der gewünschten Form aufzubauen,
- eine stationäre Heizeinrichtung zum Aufwärmen einer Schicht des photopolymerisierbaren Materials (6) in der Wanne (1) auf eine Temperatur von mindestens 30°C,
**dadurch gekennzeichnet, dass** die Heizeinrichtung wenigstens ein am oder im Wannenboden (2) angeordnetes Heizelement, wie z.B. eine Heizfolie (13, 14) umfasst und so ausgebildet ist, dass die Wärmeeinbringung großflächig und direkt an dem Wannenboden (2) und nur in der Prozesszone der Anlage erfolgt, wobei die Prozesszone den Bereich zwischen transparentem Wannenboden (2) und dem bisher gebauten Formkörper umfasst.

12. Vorrichtung nach Anspruch 11, **dadurch gekennzeichnet, dass** die Heizeinrichtung außerhalb des lichtdurchlässigen Bodenbereichs der Wanne (1) angeordnet ist.

13. Vorrichtung nach Anspruch 11 oder 12, **dadurch gekennzeichnet, dass** die Heizeinrichtung sich zumindest teilweise über den lichtdurchlässigen Bodenbereich der Wanne (1) erstreckt und lichtdurchlässig ausgebildet ist.

14. Vorrichtung nach einem der Ansprüche 11 bis 13, **dadurch gekennzeichnet, dass** ein Temperatursensor (15) vorgesehen ist, der mit der Steuereinheit zur Regelung der Heizleistung der Heizeinrichtung derart zusammenwirkt, dass eine vorgegebene Temperatur des photopolymerisierbaren Material (6) erreicht und/oder gehalten werden kann.

15. Vorrichtung nach einem der Ansprüche 11 bis 14, **dadurch gekennzeichnet, dass** der Bauplattform (5) eine Kühlvorrichtung zugeordnet ist, um ungehärtetes photopolymerisierbares Material (6), das an dem an der Bauplattform (5) gebildeten Formkörperteil anhaftet, abzukühlen und erstarren zu lassen.

16. Vorrichtung nach einem der Ansprüche 11 bis 15, **dadurch gekennzeichnet, dass** eine bewegbar geführte Rakel (11) und eine Antriebseinheit zum Hin- und Herbewegen der Rakel (11) unter der Bauplattform (5) hindurch vorgesehen sind, wobei die Rakel (11) bevorzugt zwei in Bewegungsrichtung beabstandete Rakelklingen (16, 17) aufweist, die in konstantem Abstand zum Wannenboden (2) über diesen bewegbar sind.

17. Vorrichtung nach Anspruch 16, **dadurch gekennzeichnet, dass** zwischen den zwei vorzugsweise parallelen Rakelklingen (16, 17) eine vorzugsweise unten offene Kammer (18) ausgebildet ist, deren wenigstens eine Wand wenigstens eine die Wand in Bewegungsrichtung der Rakel (11) durchsetzende Öffnung (19) zur Ausbildung eines überströmkanals aufweist.

18. Vorrichtung nach Anspruch 17, **dadurch gekennzeichnet, dass** in zwei gegenüberliegenden Wänden der Kammer (18) jeweils wenigstens eine Öffnung (21) ausgebildet ist.

19. Vorrichtung nach Anspruch 17 oder 18, **dadurch gekennzeichnet, dass** die unten offene Kammer (18) an den Stirnseiten zwischen den zwei Rakelklingen (16, 17) jeweils eine Einströmöffnung aufweist.

20. Vorrichtung nach Anspruch 17, 18 oder 19, **dadurch gekennzeichnet, dass** die Kammer (18) an ihrer Oberseite eine Nachfüllöffnung aufweist.

21. Vorrichtung nach einem der Ansprüche 16 bis 20, **dadurch gekennzeichnet, dass** wenigstens eine dritte Rakelklinge (27) vorgesehen ist, die bevorzugt zwischen den zwei Rakelklingen (16, 17) angeordnet ist und gegenüber den zwei Rakelklingen (16, 17) in Richtung zum Wannenboden (2) vorragt.

22. Vorrichtung nach einem der Ansprüche 16 bis 21, **dadurch gekennzeichnet, dass** die Rakel (11) samt Rakelklingen (16, 17) einstückig ausgebildet ist und bevorzugt aus einem Polymerwerkstoff, z.B. Polytetrafluorethylen oder Polyoxymethylen, besteht.

23. Vorrichtung nach einem der Ansprüche 11 bis 22, **dadurch gekennzeichnet, dass** eine thermische Isolierung zwischen dem Bad des polymerisierbaren Materials (6) und der Bauplattform (5) bzw. dem daran ausgebildeten Formkörper angeordnet ist, um so zwei Temperaturzonen zu bilden.

## Claims

1. A method for processing photopolymerizable material (6) for the layered construction of a shaped body, comprising
a) providing a tank (1) having a bottom transparent at least in some region, in which the photopolymerizable material is contained;
b) moving a construction platform (5) to such a height that a layer of the photopolymerizable material (6) with a specified thickness is defined between the lower side of the construction platform or, if already present, the lowermost cured layer of the part of the shaped body formed thereon and the tank bottom (2) ;
c) exposing the layer from below through the tank bottom (2) by position-specific exposure to light so as to cure the material layer in the desired shape;
d) repeating steps b) and c) until the last layer of the shaped body is formed, wherein
the photopolymerizable material (6) has a viscosity of at least 20 Pa.s at room temperature (20°C), and the layer of the photopolymerizable material (6) is heated in the tank (1) to a temperature of at least 30°C so as to lower its viscosity, **characterized in that** heating of the layer of the photopolymerizable material (6), and optionally maintaining of the temperature, are effected by the input of heat over a large area and directly on the tank bottom (2) and only in the process zone of the installation, in particular by at least one heating element disposed on or in the tank bottom (2), such as e.g. heating films, said process zone comprising the region between the transparent tank bottom (2) and the shaped body constructed so far.

2. A method according to claim 1, **characterized in that** the temperature of the photopolymerizable material (6) is maintained at a temperature of at least 30°C during steps b), c), and d).

3. A method according to claim 1 or 2, **characterized in that** the photopolymerizable material (6) has a molecular weight of at least 5000.

4. A method according to any one of claims 1 to 3, **characterized in that** uncured photopolymerizable material (6) adhering to the part of the shaped body formed on the construction platform (5) is allowed to solidify by cooling.

5. A method according to any one of claims 1 to 4, **characterized in that** the photopolymerizable material (6) is filled with particles, such as e.g. ceramic or metallic powders.

6. A method according to any one of claims 1 to 5, **characterized in that** the photopolymerizable material (6), prior to step b), is distributed in the tank (1) with the aid of a scraper (11) moved through below the construction platform (5) so as to achieve a uniform layer thickness, wherein the scraper (11) preferably comprises two doctor blades (16, 17) spaced-apart in the direction of movement and moved over the tank bottom (2) at a constant distance thereto.

7. A method according to claim 6, **characterized in that** during the distribution step the photopolymerizable material (6) is pressed into a chamber (18) formed between the two doctor blades (16, 17) through overflow channels (19),

8. A method according to claim 6 or 7, **characterized in that** fresh photopolymerizable material (6) is refilled by being introduced into an upwardly open chamber (18) formed between the two doctor blades (16, 17).

9. A method according to claim 6, 7 or 8, **characterized in that** at least a third doctor blade (27) is provided, which is preferably disposed between the two doctor blades (16, 17) and moved in such a position that unused material is lifted from the tank bottom (2).

10. A method according to any one of claims 1 to 9, **characterized in that** a thermal insulation is arranged between the bath of the photopolymerizable material (6) and the construction platform (5), or the shaped body formed thereon, so as to provide two temperature zones.

11. A device for carrying out the method according to any one of claims 1 to 10, comprising
- a tank (1) having a bottom transparent at least in some region, into which photopolymerizable material (6) can be filled;
- a construction platform (5), which is held at an adjustable height above the tank bottom;
- an exposure unit capable of being controlled from below through the tank bottom (2) for the position-selective exposure of a material layer formed between the lower side of the construction platform (5) and the tank bottom (2) ;
- a control unit arranged to polymerize in successive exposure steps superimposed layers on the construction platform (5) each with a specified geometry by controlling the exposure device, and to adapt the relative position of the construction platform (5) relative to the tank bottom (2) after each exposure step for a layer so as to successively construct the shaped body in the desired shape,
- a stationary heating device for heating a layer of the photopolymerizable material (6) in the tank (1) to a temperature of at least 30°C,
**characterized in that** the heating device comprises at least one heating element disposed on or in the tank bottom (2), such as e.g. a heating film (13, 14), and is configured such that the input of heat occurs over a large area and directly on the tank bottom (2) and only in the process zone of the plant, said process zone comprising the region between the transparent tank bottom (2) and the shaped body constructed so far.

12. A device according to claim 11, **characterized in that** the heating device is disposed outside the transparent bottom region of the tank (1).

13. A device according to claim 11 or 12, **characterized in that** the heating device extends at least partially over the transparent bottom region of the tank (1) and is designed to be transparent.

14. A device according to any one of claims 11 to 13, **characterized in that** a temperature sensor (15) is provided, which interacts with the control unit for controlling the heating power of the heating device in such a manner as to allow a specified temperature of the photopolymerizable material (6) to be attained and/or maintained.

15. A device according to any one of claims 11 to 14, **characterized in that** the construction platform (5) is associated with a cooling device for cooling, and allowing to solidify, uncured photopolymerizable material (6) adhering to the part of the shaped body formed on the construction platform (5).

16. A device according to any one of claims 11 to 15, **characterized in that** a movably guided scraper (11) and a drive unit for the reciprocating movement of the scraper (11) through below the construction platform (5) are provided, said scraper (11) preferably comprising two doctor blades (16, 17) spaced apart in the direction of movement and movable over the tank bottom (2) at a constant distance thereto.

17. A device according to claim 16, **characterized in that** a preferably downwardly open chamber (18) is formed between the two preferably parallel doctor blades (16, 17), at least one wall of which chamber comprises at least one opening (19) passing through said wall in the moving direction of the scraper (11) for forming an overflow channel.

18. A device according to claim 17, **characterized in that** at least one opening (21) is each formed in two oppositely located walls of the chamber (18).

19. A device according to claim 17 or 18, **characterized in that** the downwardly open chamber (18), on the end sides between the two doctor blades (16, 17), each comprises an inlet opening.

20. A device according to claim 17, 18 or 19, **characterized in that** the chamber (18) comprises a refill opening on its upper side.

21. A device according to any one of claims 16 to 20, **characterized in that** at least a third doctor blade (27) is provided, which is preferably disposed between the two doctor blades (16, 17) and compared to the the two doctor blades (16, 17) protrudes towards the tank bottom (2).

22. A device according to any one of claims 16 to 21, **characterized in that** the scraper (11) plus doctor blades (16, 17) is formed in one piece and preferably made of a polymer material, e.g. polytetrafluoroethylene or polyoxymethylene.

23. A device according to any one of claims 11 to 22, **characterized in that** a thermal insulation is arranged between the bath of the photopolymerizable material (6) and the construction platform (5), or the shaped body formed thereon, so as to provide two temperature zones.

## Revendications

1. Procédé de traitement de matériau photopolymérisable (6) pour la fabrication en couches d'un corps façonné, comprenant
a) la fourniture d'une cuve (1) présentant un fond perméable à la lumière au moins par endroits, dans laquelle le matériau photopolymérisable (6) se trouve,
b) la disposition d'une plateforme de construction (5) à une hauteur telle qu'une couche du matériau photopolymérisable (6) d'une épaisseur préétablie soit définie entre le côté inférieur de la plateforme de construction (5) ou, si elle est déjà présente, la couche durcie la plus basse de la partie de corps façonné qui y est formée et le fond de la cuve (2),
c) l'exposition localement sélective de la couche de dessous à travers le fond de cuve (2) afin de durcir la couche de matériau dans la forme souhaitée,
d) la répétition des étapes b) et c) jusqu'à ce que la dernière couche du corps façonné soit formée, dans lequel le matériau photopolymérisable (6) présente à température ambiante (20 °C) une viscosité d'au moins 20 Pa.s et la couche du matériau photopolymérisable (6) est chauffée dans la cuve (1) à une température d'au moins 30 °C afin d'abaisser la viscosité, **caractérisé en ce que** le chauffage de la couche du matériau photopolymérisable (6) et éventuellement le maintien de la température se font au moyen d'apport de chaleur sur une grande surface et directement sur le fond de cuve (2) et seulement dans la zone de traitement de l'installation, en particulier au moyen d'au moins un élément de chauffage agencé sur ou dans le fond de cuve (2), tel que des films chauffants, dans lequel la zone de traitement comporte la zone entre le fond de cuve (2) transparent et le corps façonné constitué jusque-là.

2. Procédé selon la revendication 1, **caractérisé en ce que** la température du matériau photopolymérisable (6) est maintenue pendant les étapes b), c) et d) à une température d'au moins 30 °C.

3. Procédé selon la revendication 1 ou 2, **caractérisé en ce que** le matériau photopolymérisable (6) présente un poids moléculaire d'au moins 5 000.

4. Procédé selon l'une quelconque des revendications 1 à 3, **caractérisé en ce que** le matériau photopolymérisable (6) non durci qui adhère à la partie de corps façonné formée sur la plateforme de construction (5) se solidifie par refroidissement.

5. Procédé selon l'une quelconque des revendications 1 à 4, **caractérisé en ce que** le matériau photopolymérisable (6) est chargé de particules telles que des poudres céramiques ou métalliques.

6. Procédé selon l'une quelconque des revendications 1 à 5, **caractérisé en ce que** le matériau photopolymérisable (6) est réparti avant l'étape b) dans la cuve (1) à l'aide d'une racle (11) déplacée sous la plateforme de construction (5) pour l'obtention d'une épaisseur de couche uniforme, dans lequel la racle (11) présente de préférence deux lames de racle (16, 17) espacées dans le sens de déplacement, qui sont déplacées à distance constante du fond de cuve (2) au-dessus de celui-ci.

7. Procédé selon la revendication 6, **caractérisé en ce que** le matériau photopolymérisable (6) est pressé pendant l'étape de répartition à travers des canaux de débordement (19) dans une chambre (18) formée entre les deux lames de racle (16, 17).

8. Procédé selon la revendication 6 ou 7, **caractérisé en ce que** du matériau photopolymérisable frais (6) est rechargé par introduction dans une chambre (18) formée entre les deux lames de racle (16, 17) et ouverte dans le haut.

9. Procédé selon la revendication 6, 7 ou 8, **caractérisé en ce qu'**il est prévu au moins une troisième lame de racle (27) qui est agencée de préférence entre les deux lames de racle (16, 17) et est déplacée dans une position telle que le matériau inutilisé soit enlevé du fond de cuve (2).

10. Procédé selon l'une quelconque des revendications 1 à 9, **caractérisé en ce qu'**une isolation thermique est agencée entre le bain du matériau polymérisable (6) et la plateforme de construction (5) ou le corps façonné formé sur celle-ci afin de former ainsi deux zones de température.

11. Dispositif de réalisation du procédé selon l'une quelconque des revendications 1 à 10, comprenant
- une cuve (1) avec un fond perméable à la lumière au moins par endroits, dans laquelle du matériau photopolymérisable (6) peut être déversé,
- une plateforme de construction (5) qui est maintenue à hauteur réglable au-dessus du fond de cuve (2),
- une unité d'exposition qui peut être commandée pour l'exposition localement sélective d'une couche de matériau formée entre le côté inférieur de la plateforme de construction (5) et le fond de cuve (2) de dessous à travers le fond de cuve (2),
- une unité de commande qui est préparée afin de polymériser dans des étapes d'exposition successives des couches superposées sur la plateforme de construction (5) respectivement avec une géométrie préétablie par commande de l'unité d'exposition et d'adapter après chaque étape d'exposition pour une couche la position relative de la plateforme de construction (5) au fond de cuve (2) afin de constituer ainsi successivement le corps façonné sous la forme souhaitée,
- un dispositif de chauffage stationnaire pour chauffer une couche du matériau photopolymérisable (6) dans la cuve (1) à une température d'au moins 30 °C,
**caractérisé en ce que** le dispositif de chauffage comporte au moins un élément de chauffage agencé sur ou dans le fond de cuve (2), tel qu'un film chauffant (13, 14), et est formé de sorte que l'apport de chaleur se fasse sur une grande surface et directement sur le fond de cuve (2) et seulement dans la zone de traitement de l'installation, dans lequel la zone de traitement comporte la zone entre le fond de cuve (2) transparent et le corps façonné constitué jusque-là.

12. Dispositif selon la revendication 11, **caractérisé en ce que** le dispositif de chauffage est agencé en dehors de la zone de fond perméable à la lumière de la cuve (1).

13. Dispositif selon la revendication 11 ou 12, **caractérisé en ce que** le dispositif de chauffage s'étend au moins partiellement sur la zone de fond perméable à la lumière de la cuve (1) et est conformé perméable à la lumière.

14. Dispositif selon l'une quelconque des revendications 11 à 13, **caractérisé en ce qu'**il est prévu un capteur de température (15) qui coopère avec l'unité de commande pour la régulation de la puissance de chauffage du dispositif de chauffage de telle manière qu'une température préétablie du matériau photopolymérisable (6) puisse être atteinte et/ou maintenue.

15. Dispositif selon l'une quelconque des revendications 11 à 14, **caractérisé en ce qu'**à la plateforme de construction (5) est associé un dispositif de refroidissement afin de refroidir et solidifier le matériau photopolymérisable non durci (6) qui adhère à la partie de corps façonné formée sur la plateforme de construction (5).

16. Dispositif selon l'une quelconque des revendications 11 à 15, **caractérisé en ce qu'**une racle (11) guidée de manière mobile et une unité d'entraînement pour le déplacement alternatif de la racle (11) sont prévues sous la plateforme de construction (5), dans lequel la racle (11) présente de préférence deux lames de racle (16, 17) espacées dans le sens de déplacement, qui sont mobiles à distance constante du fond de cuve (2) au-dessus de celui-ci.

17. Dispositif selon la revendication 16, **caractérisé en ce qu'**il est formé entre les deux lames de racle (16, 17) de préférence parallèles une chambre (18) ouverte vers le bas de préférence dont au moins une paroi présente au moins une ouverture (19) traversant la paroi dans le sens de déplacement de la racle (11) pour la formation d'un canal de débordement.

18. Dispositif selon la revendication 17, **caractérisé en ce que** respectivement au moins une ouverture (21) est ménagée dans deux parois opposées de la chambre (18).

19. Dispositif selon la revendication 17 ou 18, **caractérisé en ce que** la chambre (18) ouverte vers le bas présente sur les côtés avant entre les deux lames de racle (16, 17) respectivement une ouverture d'admission.

20. Dispositif selon la revendication 17, 18 ou 19, **caractérisé en ce que** la chambre (18) présente sur son côté supérieur une ouverture de rechargement.

21. Dispositif selon l'une quelconque des revendications 16 à 20, **caractérisé en ce qu'**il est prévu au moins une troisième lame de racle (27) qui est agencée de préférence entre les deux lames de racle (16, 17) et dépasse par rapport aux deux lames de racle (16, 17) en direction du fond de cuve (2).

22. Dispositif selon l'une quelconque des revendications 16 à 21, **caractérisé en ce que** la racle (11) est réalisée d'un seul tenant avec des lames de racle (16, 17) et se compose de préférence d'un matériau polymère, par exemple du polytétrafluoroéthylène ou du polyoxyméthylène.

23. Dispositif selon l'une quelconque des revendications 11 à 22, **caractérisé en ce qu'**une isolation thermique est agencée entre le bain du matériau polymérisable (6) et la plateforme de construction (5) ou le corps façonné qui y est formé afin de former ainsi deux zones de température.
